# EUROPEAN PATENT APPLICATION

(11) **EP 2 832 991 A1**
(43) Date of publication of application: **04.02.2015**
(21) Application number: 13178785.5
(22) Date of filing: 31.07.2013
(51) Int. Cl.: F03D 7/02

(54) **Wind turbine control method based on recognition of meteorological patterns**

(71) Applicant: Siemens Aktiengesellschaft, 80333 München (DE)
(72) Inventor: Frydendal, Ib, 6683 Føvling (DK)

(57) **Abstract**

The invention relates to a method to control the operation of a wind turbine. According to the method invented the operation of the wind turbine is controlled by a load control system, which uses either a sensitive mode or a normal mode for the control. The normal mode is prepared to keep a predefined first wind turbine operation as long as ambient influences, causing load changes on wind turbine components, are below predefined threshold values. The sensitive mode is prepared for a predefined second wind turbine operation, if the ambient influences, causing load changes on wind turbine components, are above predefined threshold values. An actual air pressure is measured at the wind turbine site. The actual air pressure is taken into account for activating the sensitive mode for the wind turbine operation.

## Description

The invention relates to a method to control the operation of a wind turbine.

The operation of a wind turbine is controlled by a so called "wind turbine load control system". This load control system uses many input parameters for this purpose, such as:
- the wind direction at the wind turbine or at its site,
- the wind speed at the wind turbine site or at its site,
- the turbulences, acting on wind turbine components,
- the pitch angle of the wind turbine blades,
- specific structural loads like vibration, bending moments or torque.

Major challenges for a load control system are extreme gusts of the wind, rapid changes in the wind direction and even wind directions, wherein the wind is acting directly and frontal to the wind turbine and its rotor blades.

These challenges need to be addressed quite rapidly by the load control system as they might result in extreme loads to the wind turbine components reducing their live time and their functionality.

It is known to address these challenges by a specific "safety distance design", which ensures that the wind turbine and its components are able to withstand extreme loads for site specific and thus given phenomena.

This design is quite expensive and might lead to a set of different wind turbine designs, which are customized as they are dependent on the site of the wind turbine. There is no control of the wind turbine in view to extreme loads, the wind turbines are designed to withstand the phenomena at a given site in a passive manner.

It is even known to address the challenges above by a rapid reacting load control system. This type of load control system needs to be very sensitive in realizing any possible event, which might harm the wind turbine.

This results in a kind of "keep always safety operation" of the wind turbine, reducing the possible best overall performance of the wind turbine by always keeping in mind safety issues.

It is therefore the aim of the invention to provide an improved method to control the operation of a wind turbine, which allows a save operation of the wind turbine while achieving an optimized overall performance of the wind turbine even in bad circumstances.

This problem is solved by the features of claim 1. Preferred configurations are addressed by the dependent claims.

The invention relates to a method to control the operation of a wind turbine. According to the method invented the operation of the wind turbine is controlled by a load control system, which uses either a sensitive mode or a normal mode for the control. The normal mode is prepared to keep a predefined first wind turbine operation as long as ambient influences, causing load changes on wind turbine components, are below predefined threshold values. The sensitive mode is prepared for a predefined second wind turbine operation, if the ambient influences, causing load changes on wind turbine components, are above predefined threshold values. An actual air pressure is measured at the wind turbine site. The actual air pressure is taken into account for activating the sensitive mode for the wind turbine operation.

In a preferred configuration the actual air pressure is compared with a nominal air pressure threshold value. The sensitivity mode is activated if the measured air pressure falls below the air pressure threshold value.

In a preferred configuration the normal mode is activated if the measured air pressure exceeds the air pressure threshold value.

The normal mode is used to keep an optimized overall performance of the wind turbine, mainly for well known and not-dangerous ambient and weather conditions.

Accordingly the sensitive mode is used for a save operation of the wind turbine, for example to address stormy weather conditions or the like. Thus impacts of swift load changes on the wind turbine components are reduced or even avoided.

Using the air pressure for activating either the normal mode or the sensitive mode allows a well founded and even accelerated switching decision.

The invention beneficial uses the knowledge that no severe weather events will occur as long as the air pressure is higher than a given threshold value. The weather will stay calm and bright in this case.

It is an indication of a weather change if the air pressure falls below the given threshold value. A swift or rapid weather change is indicated by a swift or rapid change in the air pressure.

The lower the air pressure the more likely swift weather changes might happen, causing even swift loads that are acting on the wind turbine components.

Thus the sensitivity of the load control system is enhanced compared with the prior art known.

The sensitivity of the load control system is controlled by the air pressure. Thus a high sensitivity is ensured if severe weather-events are likely to occur. Additionally an optimized and thus high output power production of the wind turbine is ensured if there is only a low probability of severe weather-events.

In a preferred embodiment pre-known weather patterns and their time-dependent change are additionally used for the switching decision between the modes. The weather patterns might be obtained by weather prediction systems or by weather prediction authorities.

Thus the sensitivity of the load control system is additionally enhanced.

Any combination of weather parameters such as wind speed, wind direction, pressure, temperature, air humidity and the like may be used to characterize the present weather type and to estimate the probability of extreme events more precisely.

In a preferred configuration of the invention the normal wind turbine operation mode may be altered if the probability of severe events is high. For example if the air is stable and the probability of severe events is low an annual energy production, abbreviated as "AEP", might be used as a target-function to achieve an optimized electrical energy output.

In another preferred configuration of the invention an online load control system is implemented. This system changes the mode between a fatigue load control and an extreme load control for example, preferably according to the probability of (extreme) weather events.

The idea of the invention is shown and described by help of figures.
- FIG 1: shows the specific weather data of a cyclone, passing a given wind turbine site,
- FIG 2: shows a "stable air" situation, wherein no thermal turbulences may occur,
- FIG 3: shows an "in-stable air" situation, wherein thermal turbulences may occur,
- FIG 4: shows three events, being combined in one graph, and
- FIG 5 and FIG 6: show examples of general weather maps.

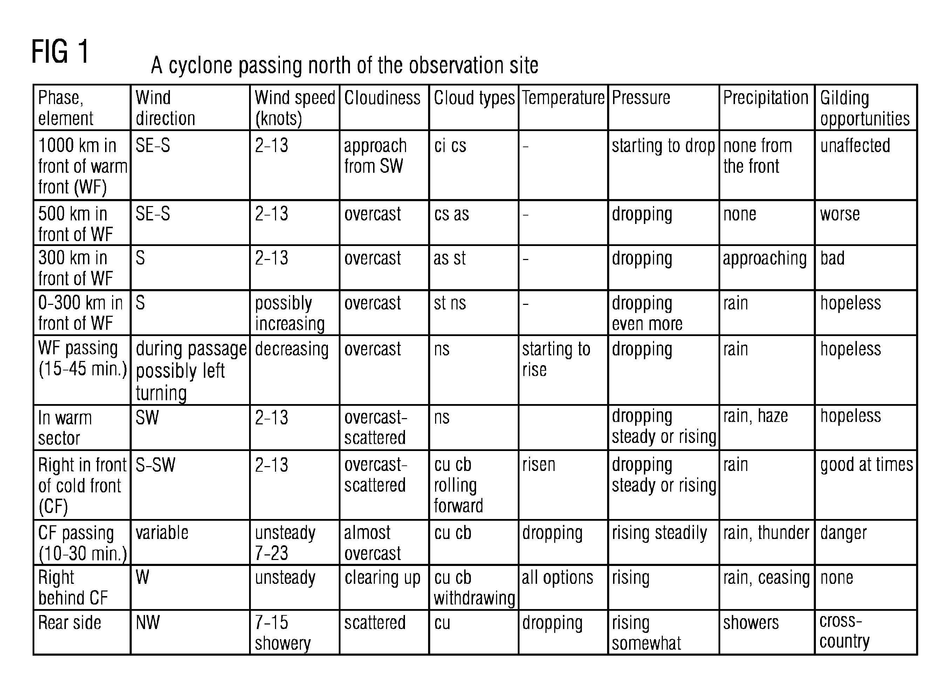

FIG 1 shows the specific weather data of a cyclone, passing north of a given wind turbine site.

This tabulation is an example of interpretation of only few parameters and observations that are preferably used for the characterisation of weather conditions at a wind turbine site.

The danger for wind turbines is primarily a passage of a cold front, which is characterized by rapid changes in the air pressure (dropping) and in the temperature (dropping), too.

If this is observed the wind turbine is switched into the sensitive mode thus the operation of the wind turbine is more conservative than it could be. Thus swift and/or rapid load changes, acting on wind turbine components, are addressed by this sensitive and carful-designed mode of operation.

The cyclone is signalled by an air-pressure, staying below a given threshold value, but starting to increase again. At the same time the temperature stays low. This is marked in the tabulation by the wording "danger" in the last column.

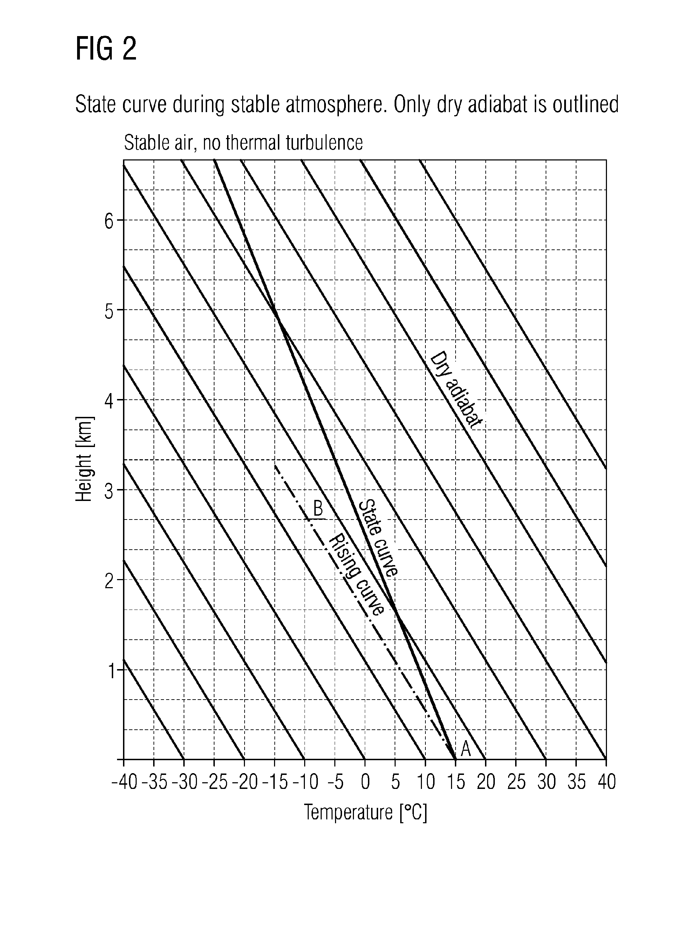

FIG 2 shows a "stable air" situation, wherein no thermal turbulences may occur.

The vertical axis shows the height, measured in km, while the horizontal axis shows the temperature, measured in °C.

For the detection of thermal turbulences the stability of the air is important.

Stable air does not produce thermal turbulences, while in-stable air may produce thermal turbulences.

The thermal turbulences start in the morning when the sun has heated the surface sufficiently. Thus the surface air temperature is increased to a certain level, which is called "release temperature".

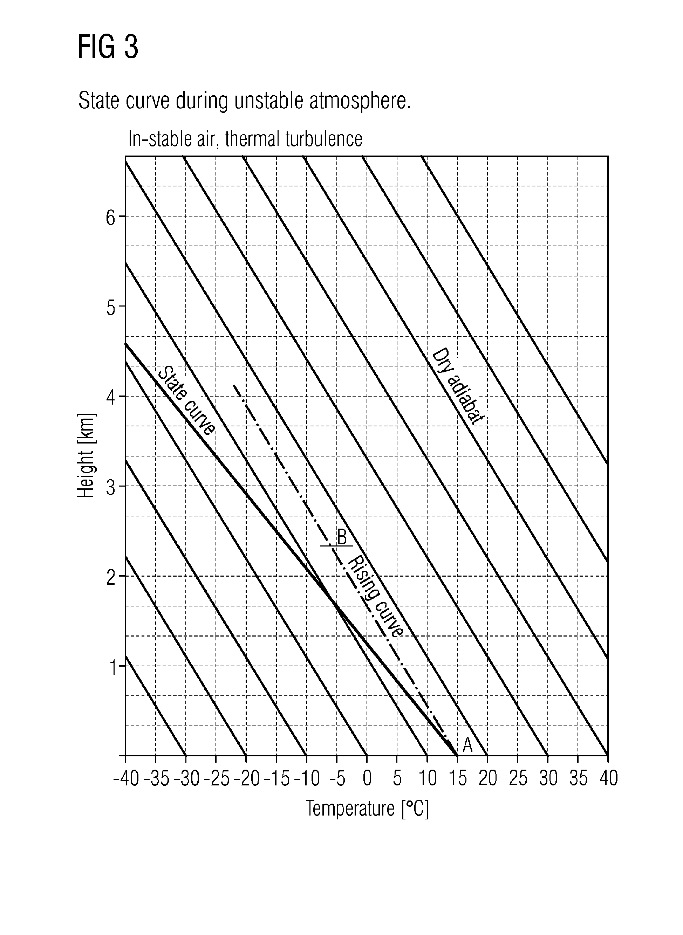

FIG 3 shows "in-stable air" situations, wherein thermal turbulences may occur.

The vertical axis shows the height, measured in km, while the horizontal axis shows the temperature, measured in °C.

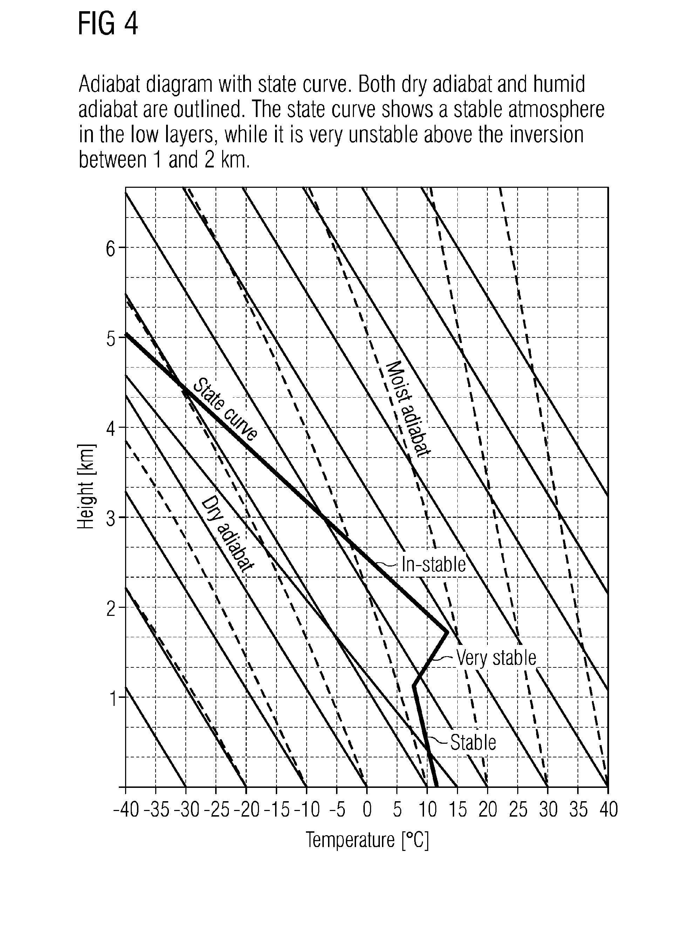

FIG 4 shows three combined events in one graph, reaching from an "in-stable situation" via a "very stable situation" towards a "stable situation".

The vertical axis shows the height, measured in km, while the horizontal axis shows the temperature, measured in °C.

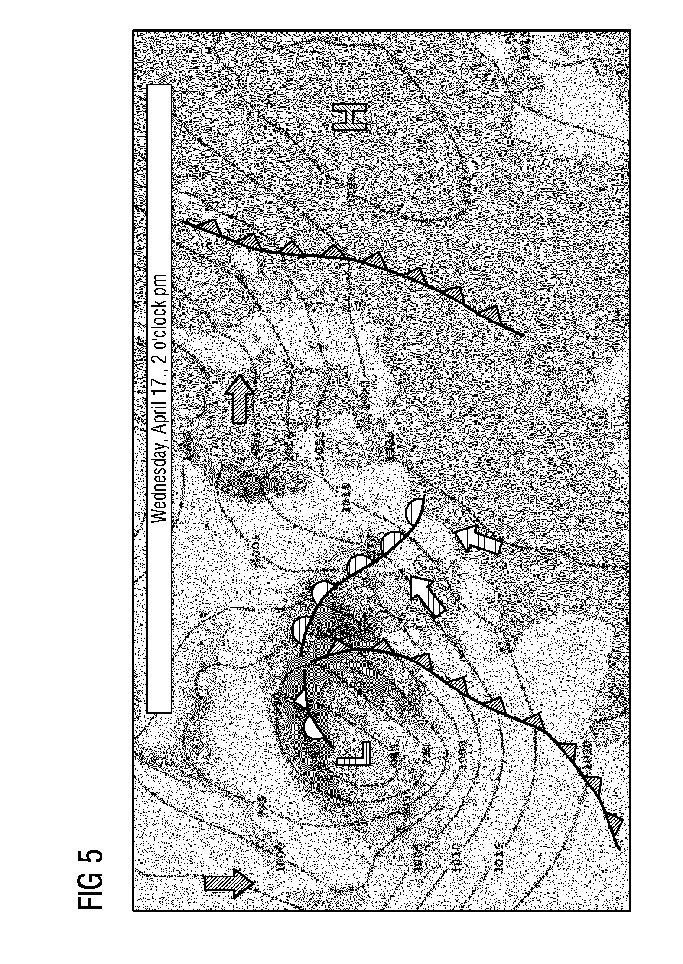

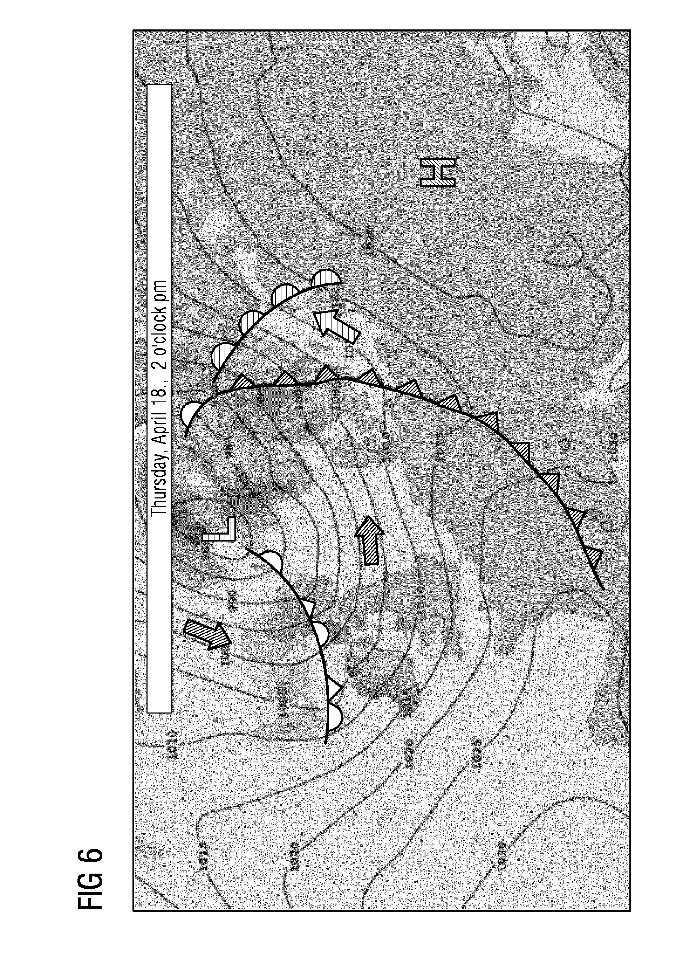

FIG 5 and FIG 6 show examples of general weather maps. In these two maps it is observed that a low pressure west of Scotland is moving in north-west-direction to the west of Norway, between April 17^{th} and April 18^{th}.

During this time a cold front has passed Denmark, however the air pressure was relatively high and hence the cold front passage has not produced severe events.

In any case the cold front passage, which lasted from 10 minutes up to 30 minutes, would have been detectable based on the change of air pressure and the change of the temperature. As the low pressure passes much closer to Scotland the conditions here were more likely to be more severe compared to the situation in Denmark. This could be detected by the low air pressure.

Again the passage of the cold front is to be detected by an air pressure, being below a given threshold value, and its sudden increase while a decreasing temperature at the same time.

## Claims

1. Method to control the operation of a wind turbine,
- wherein the operation of the wind turbine is controlled by a load control system, which uses either a sensitive mode or a normal mode for the control,
- wherein the normal mode is prepared to keep a predefined first wind turbine operation as long as ambient influences, causing load changes on wind turbine components, are below predefined threshold values,
- wherein the sensitive mode is prepared for a predefined second wind turbine operation, if the ambient influences, causing load changes on wind turbine components, are above predefined threshold values,
- wherein an actual air pressure is measured at the wind turbine site, and
- wherein the actual air pressure is taken into account for activating the sensitive mode for the wind turbine operation.

2. Method according claim 1,
- wherein the actual air pressure is compared with a given nominal air pressure threshold value,
- wherein the sensitivity mode is activated if the measured air pressure falls below the air pressure threshold value, and
- wherein the normal mode is activated if the measured air pressure exceeds the air pressure threshold value.

3. Method according claim 1 or claim 2, wherein the sensitive mode is prepared to control the wind turbine operation if swift load changes on wind turbine components occur, while the swift load changes are caused by changes in the wind gust and/or by changes in the wind direction and/or are caused by situations wherein the wind is acting frontal on the wind turbine rotor blades.

4. Method according claim 1,
- wherein a time wise progression of the ambient air pressure is measured,
- wherein the measured time wise progression of the ambient air pressure is compared with a time wise progression of the nominal air value threshold values,
- wherein the measured time wise progression of the ambient air pressure is taken into account for activating the sensitive mode for the wind turbine operation.

5. Method according claim 4, wherein a pre-determined weather system pattern is used to predict the probability of swift load changes.

6. Method according claim 5,
- wherein the predicted probability is compared with a nominal probability,
- wherein the sensitive mode is activated if the predicted probability is above the nominal probability, and
- wherein the normal mode is activated if the predicted probability is below the nominal probability.

7. Method according claim 1 or claim 2, wherein the load control system additionally uses at least one of these parameters for the switch decision between the modes: wind speed and/or wind direction and/or ambient air temperature and/or air humidity, preferably each of them being measured at the wind turbine site.

8. Method according claim 1,
- wherein the load control system detects a passage of a cold front by measuring of a rapid temperature reduction and by measuring an increasing air pressure, and
- wherein the sensitive mode of the load control system is prepared for an accelerated activation if the cold-front-passage is detected.

9. Method according claim 1,
- wherein the load control system detects thermal air turbulences at the wind turbine site by measuring an increasing temperature of the ambient surface of the wind turbine, and
- wherein the sensitive mode of the load control system is prepared for an accelerated activation if thermal air turbulences are detected.
